## Europäisches Patentamt

(19) **European Patent Office**

**Office européen des brevets**

(11) Veröffentlichungsnummer: **0 169 932**
**B1**

(12) # EUROPÄISCHE PATENTSCHRIFT

(45) Veröffentlichungstag der Patentschrift:
**22.04.87**

(51) Int. Cl.⁴: **B 24 B 13/00,** B 23 B 31/32

(21) Anmeldenummer: **84109233.1**

(22) Anmeldetag: **03.08.84**

(54) **Vorrichtung zum Halten von empfindlichen Werkstücken, insbesondere von optischen Linsen und anderen optischen Bauelementen.**

(43) Veröffentlichungstag der Anmeldung:
**05.02.86 Patentblatt 86/6**

(45) Bekanntmachung des Hinweises auf die Patenterteilung:
**22.04.87 Patentblatt 87/17**

(84) Benannte Vertragsstaaten:
**CH DE FR GB IT LI**

(56) Entgegenhaltungen:
**CH - A - 365 990**
**GB - A - 480 600**
**US - A - 1 683 712**
**US - A - 1 938 356**
**US - A - 2 389 366**
**US - A - 3 006 653**
**US - A - 4 098 028**

(73) Patentinhaber: **Wilhelm Loh Wetzlar Optikmaschinen GmbH & Co. KG, Friedenstrasse 26 Postfach 2069, D-6330 Wetzlar (DE)**

(72) Erfinder: **Mandler, Roland, Eichenweg 6, D-6301 Heuchelheim (DE)**

(74) Vertreter: **Patentanwälte Dipl.-Ing. R. Schlee Dipl.-Ing. A. Missling, Bismarckstrasse 43, D-6300 Giessen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Empfindliche Werkstücke, wozu insbesondere auch optische Linsen und andere optische Bauelemente gehören, müssen für verschiedene Zwecke möglichst schonend gehalten werden, insbesondere auch für den Transport in eine Bearbeitungsmaschine oder aus einer Bearbeitungsmaschine.

Bekannt sind Haltevorrichtungen mit einem Vakuumsauger. Vakuumsauger sind nur anwendbar, wenn es die Oberfläche des Werkstückes erlaubt, einen Dichtungsrand des Saugers luftdicht an das Werkstück anzulegen. Nur dann nämlich kann ein Unterdruck hergestellt werden. Ein sicherer Halt des Werkstückes ist nur gewährleistet, wenn ein offenes Vakuumsystem verwendet wird, so dass eine geringe Undichtheit nicht zum Abbau des Vakuums führt. Ein offenes Vakuumsystem hat jedoch den Nachteil, dass Schmutz in das System eingesaugt werden kann. Diese Gefahr ist besonders gross in Bearbeitungsmaschinen, wie z.B. Linsenschleifmaschinen, wo Schleifstaub anfällt und mit einem Kühlmittel gearbeitet werden muss. Ein gegen Verunreinigungen abgedichtetes indirektes Vakuumsystem hat keine ausreichend sichere Haltewirkung, da kleine Undichtheiten zu einer raschen Druckerhöhung führen und damit die Saugkraft rasch abnimmt. Ausserdem birgt das direkte Ansaugen von Werkstücken die Gefahr, dass beim Ansaugen die Werkstück-Oberfläche beschädigt wird. Bekannt sind auch Halteeinrichtungen mit Spannzangen aus Kunststoff oder Metall. Damit lassen sich Werkstücke sicher halten, jedoch besteht die Gefahr, dass die Werkstücke durch zu grosse, oft nur punktweise angreifende Spannkräfte unzulässig deformiert und eventuell auch zerstört werden.

Der Erfindung liegt die Aufgabe zugrunde, eine Haltevorrichtung für empfindliche Werkstücke, insbesondere für optische Linsen, zu schaffen, mit der die Werkstücke ebenso sicher gehalten werden können wie mit den bekannten Spannzangen, wobei das Festhalten jedoch verspannungsfrei und ohne Zerstörungsgefahr erfolgen soll.

Die zur Lösung dieser Erfindungsaufgabe geschaffene Vorrichtung zum Halten von empfindlichen Werkstücken, insbesondere von optischen Linsen, insbesondere während des Transportes, ist gekennzeichnet durch eine Membrane aus elastischem Werkstoff, die eine mit dem Werkstück in Eingriff bringbare umlaufende Spannfläche aufweist und mit einem Tragkörper für die Membrane, an dem diese fluiddicht so eingespannt ist, dass zwischen Tragkörper und Membrane eine Kammer besteht, die über Kanäle mit einer Quelle und/oder Senke für ein Fluid, insbesondere für ein Druckgas, insbesondere für Luft, verbindbar ist und dass die Membrane durch Änderung des Fluiddruckes in der Kammer so deformierbar ist, dass die Spannfläche wahlweise aufgeweitet und zusammengezogen wird.

In einer so ausgebildeten Vorrichtung wird das Werkstück längs der gesamten umlaufenden Spannfläche gehalten. Infolge der Elastizität der Membrane legt sich die Spannfläche über ihre gesamte Länge an das Werkstück an, wodurch eine hohe punktförmige Belastung vermieden wird. Die Haltevorrichtung ist gegen Schmutz unempfindlich. Das Vakuumsystem ist geschlossen, da Unterdruck, falls ein solcher angewendet wird, unterhalb der Membrane auf diese einwirkt. Im allgemeinen wird das Werkstück an einem äusseren Umfangsrand erfasst. Möglich sind aber auch Ausführungsformen, mit denen das Werkstück an einem Innenrand erfasst wird. In diesem Fall ist die Spannfläche vor dem Aufnehmen des Werkstückes zusammengezogen, z.B. mit Hilfe eines Unterdruckes und wird nach dem Aufsetzen des Werkstückes ausgedehnt, z.B. mit Hilfe eines Überdruckes oder auch mit Hilfe der elastischen Kräfte der Membrane alleine.

Bei einer bevorzugten Ausführungsform ist die Membrane ringförmig ausgebildet (Anspruch 2). Die Erfindung ist jedoch auch mit kreisförmigen Membranen ausführbar. Ringförmige Membranen haben den Vorteil, dass eine genau definierte ringförmige Auflagefläche für das Werkstück, z.B. für eine der optisch wirksamen Flächen einer optischen Linse geschaffen wird.

Wenn die Spannfläche gemäss Anspruch 3 nahe beim Aussenrand der Membrane angeordnet wird, erhält man eine optimale trichterförmige Erweiterung, wenn die Vorrichtung für das Festhalten eines Werkstückes an seinem Aussenumfang ausgebildet ist.

Eine vorteilhafte und sichere Einspannung der Membrane erhält man, wenn dort Einspannwände gemäss Anspruch 4 vorgesehen werden. Solche Einspannwände können zwischen starren Teilen der Vorrichtung sicher gehalten werden, insbesondere dann, wenn sie flanschartige Einspannränder aufweisen, wie dies vorzugsweise der Fall sein soll. Bei einer ringförmigen Membrane sind solche Wände vorzugsweise am Aussenrand und am Innenrand angeordnet (Anspruch 5).

Eine starre Anlagefläche für die Membrane gemäss Anspruch 6 hat den Vorteil, dass die Lage des Werkstückes genau definiert ist, was z.B. für die Übergabe an ein Spannfutter einer Bearbeitungsmaschine vorteilhaft ist. Eine satte Auflage der Membrane auf der starren Anlagefläche ist besonders sicher durch Anwendung von Unterdruck unterhalb der Membrane erreichbar. Eine Kegelform der festen Anlagefläche gemäss Anspruch 7 hat den Vorteil, dass die Spannkräfte, je nach Wahl des Kegelwinkels, grösser oder kleiner gewählt werden können. Bei kleineren Kegelwinkeln ist die Spannkraft grösser als bei grösseren Kegelwinkeln.

In den Ansprüchen 8 und 9 ist eine Gesamtkonstruktion einer Haltevorrichtung mit ringförmiger Membrane angegeben, die nur vier verhältnismässig einfach geformte starre Teile aufweist, die aus Kunststoff oder Metall bestehen können.

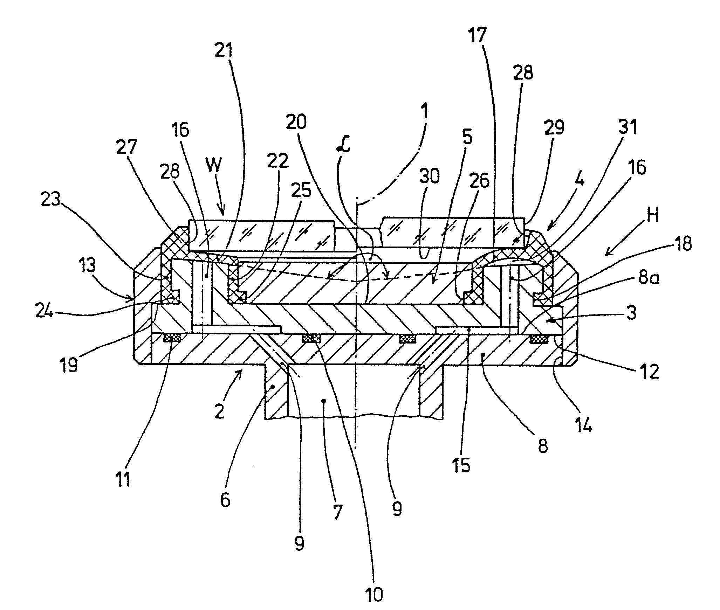

In der Zeichnung ist ein Ausführungsbeispiel der Erfindung im diametralen Schnitt dargestellt.

Die insgesamt mit H bezeichnete Haltevorrichtung dient zum Halten eines Werkstückes W. Die Vorrichtung ist rotationssymmetrisch zur Achse 1 ausgebildet. Rechts von der Achse 1 ist der Zustand während des Einlegens oder Entnehmens eines Werkstückes dargestellt und links von der Achse 1 der Zustand, in dem das Werkstück W festgespannt ist. Die Haltevorrichtung hat einen Grundkörper 2, einen auf diesem aufliegenden Membrane-Haltekörper 3, eine Membrane 4, eine die Membrane an den Membrane-Haltekörper 3 andrückende Membrane-Einspannscheibe 5 und einen den Membrane-Haltekörper 3 gegen den Grundkörper 2 drückenden Umfassungsring 13. Die Beschaffenheit und das Zusammenwirken dieser Hauptbestandteile sollen nachfolgend im einzelnen betrachtet werden.

Der Grundkörper 2 hat einen Schaft 6, in dem sich ein Hohlraum 7 befindet. Der Schaft 6 trägt einen scheibenförmigen Teil 8 des Grundkörpers 2. Vom Hohlraum 6 zu der im wesentlichen ebenen Oberseite 8a des scheibenförmigen Teiles führen mehrere Luftkanäle 9. An der Oberseite des scheibenförmigen Teiles befinden sich zwei ringförmige Nuten, in denen elastische Dichtungen, nämlich sogenannte O-Ringe 10, 11, aufgenommen sind. Die O-Ringe 10, 11 sind konzentrisch zur Achse 1 angeordnet.

Der Membrane-Haltekörper liegt mit einer im wesentlichen ebenen Unterfläche 12 auf der Oberseite 8a des Grundkörpers auf und drückt die O-Ringe 10, 11 elastisch zusammen. Der Membrane-Haltekörper wird durch den Umfassungsring 13 am Grundkörper 2 festgehalten. Zu diesem Zweck ist der Umfassungsring 13 bei 14 auf den Grundkörper 2 aufgepresst.

An der Unterseite des Membrane-Haltekörpers befindet sich eine flache, jedoch verhältnismässig breite Ringnut 15, die einmal mit den Luftkanälen 9 kommuniziert und von der zum anderen Kanäle 16 ausgehen, die an einer hohlkegeligen Oberseite 17 des Membrane-Haltekörpers ausmünden. Der Kegelwinkel α der Hohlkegelfläche 17 ist bei dem gezeichneten Ausführungsbeispiel verhältnismässig gross und beträgt 170 Winkelgrade, d.h. die Kegelfläche ist nur schwach geneigt. Die Ringnut 15 liegt innerhalb der durch die O-Ringe 10, 11 eingegrenzten Zone, so dass das Hohlraumsystem 7, 9, 15, 16 gegenüber der Umgebung abgedichtet ist.

Der Membrane-Haltekörper hat eine Aussennut 18 für den Eingriff der Membran 4. Die Aussennut 18 ist nach unten durch einen Halteflansch begrenzt, auf den eine Schulter 19 des Umfassungsringes 13 drückt. Eine grosse Ausnehmung 20 im Membrane-Haltekörper 3 ist im wesentlichen durch die Membrane-Einspannscheibe 5 ausgefüllt.

Die Membrane 4 ist insgesamt ringförmig ausgebildet. Sie hat einen Teil 21, der zur Anpassung an die Oberseite 17 des Membrane-Haltekörpers 3 leicht kegelförmig ausgebildet ist und der als Auflagefläche für das Werkstück W dient. Von der Membrane ragen zwei zueinander konzentrische Einspannwände 22 und 23 ab. Die äussere Einspannwand 23 hat an ihrem unteren Ende einen flanschartigen Einspannrand 24, der in die Aussennut 18 des Membrane-Haltekörpers eingreift. Ein entsprechender Einspannrand 25 an der inneren Einspannwand 22 greift in eine Ausfalzung 26 an der Membrane-Einspannscheibe 5 ein.

In der Nähe des äusseren Randes hat die Membrane eine wulstartige Verdickung 27, an der sich eine Spannfläche 28 befindet.

Die Haltevorrichtung H wirkt wie folgt. Wenn die Haltevorrichtung H montiert ist, z.B. an einer Transporteinrichtung für Werkstücke W, kommuniziert der Hohlraum 7 mit einer Luftquelle, über die Druckluft zugeführt werden kann und einer Luftsenke, über die Luft aus dem Hohlraumsystem 7, 9, 15, 16 abgesaugt werden kann.

Wenn ein Werkstück W aufgenommen werden soll, wird das genannte Hohlraumsystem unter Überdruck gesetzt, wobei die Membrane sozusagen aufgeblasen wird und die rechts von der Achse 1 dargestellte Form annimmt. Hierbei erweitert sich die Spannfläche 28 und verformt sich ausserdem trichterförmig. Das Werkstück W lässt sich bequem einlegen bzw. kann bequem erfasst werden, ohne dass eine sehr genaue Ausrichtung das Werkstück W auf die Haltevorrichtung H erforderlich ist. Die Trichterform der Spannfläche in diesem Stadium erleichtert die Aufnahme des Werkstückes W weiterhin.

Nachdem das Werkstück so ausgenommen ist, wie rechts von der Achse 1 dargestellt, wird der Druck im Hohlraumsystem 16, 15, 9, 7 abgesenkt, und zwar vorzugsweise bis unterhalb des Umgebungsdruckes. Hierbei legt sich der Membraneteil 21 an die hohlkegelige Oberseite 17 des Membrane-Haltekörpers an. Die Spannfläche 28 verengt sich dabei und legt sich fest an die zylindrische Umfangsfläche 29 des Werkstückes W an, das im dargestellten Fall eine zylindrische Glasplatte ist. Hierbei wird das Werkstück W auch etwas abgesenkt, wie in der Zeichnung dargestellt. Das Werkstück W ist nun fest in der Haltevorrichtung H gehalten und kann sicher transportiert werden. Das Hohlraumsystem 16, 15, 9, 7 hat keine Verbindung nach aussen, so dass auch keine Gefahr des Eindringens von Schmutz in dieses System besteht. Die Vorrichtung hat also die Vorteile eines sogenannten indirekten Vakuumsystems.

Bei aufgewölbter Membran besteht zwischen der hohlkegeligen Fläche 17 und dem Membranteil 21 eine ringförmige Kammer 31. Diese Luftkammer schrumpft beim Absenken des Luftdruckes. Der Inhalt der Luftkammer wird schliesslich Null, wenn sich der Membraneteil 21 an die hohlkegelige Fläche 17 angelegt hat.

Wenn das Werkstück W freigegeben werden soll, wird wieder Überdruck in das Hohlraumsystem 7, 9, 15, 16 eingegeben, wobei die Membrane so aufgewölbt wird, wie rechts von der Achse 1 dargestellt. Das Werkstück W kann nun ohne jeden Widerstand entnommen werden. Durch die nur schmale Anlage zwischen der Werkstückunterseite 30 und der Membrane 4 wird auch ein Festsaugen des Werkstückes vermieden, selbst wenn sich Feuchtigkeit zwischen dem Werkstück W und der Membrane 4 befinden sollte.

Die Erfindung wurde am Beispiel einer Haltevorrichtung H beschrieben, mit der ein Werkstück W an seinem Aussenumfang 29 erfasst wird. Die Erfindung ist jedoch auch anwendbar für das Halten von Werkstücken, die einen Innenrand aufweisen. Naturgemäss muss in diesem Fall der Spannrand zusammengezogen sein, wenn das Werkstück eingelegt wird und zum Festspannen des Werkstückes ausgedehnt werden. Eine solche Haltevorrichtung könnte beispielsweise so konstruiert sein, dass die Spannfläche an der Aussenseite eines Wulstes entsprechend dem Wulst 27 angeordnet ist. Ein solcher Wulst könnte zum Spannen dadurch ausgedehnt werden, dass die Membrane unter Druck gesetzt wird, wie dies rechts von der Achse 1 dargestellt ist.

In der vorstehenden Beschreibung wird meist von Luft als Gas gesprochen, mit der die Membrane 4 beaufschlagt wird. Selbstverständlich kann auch ein anderes Gas als Luft verwendet werden. Auszuschliessen ist auch nicht eine Druckbeaufschlagung mit einem anderen Fluid als einem Gas, z.B. mittels Drucköl. Das Aufbringen eines Druckes, der unterhalb des Umgebungsdruckes liegt, könnte dann allerdings problematisch werden. Die Erfindung schliesst jedoch nicht Ausführungsformen aus, bei denen die Haltekraft ausschliesslich durch elastische Kräfte der Membrane wirkt, so dass die Zuhilfenahme eines Unterdruckes nicht nötig ist.

**Patentansprüche**

1. Vorrichtung zum Halten von empfindlichen Werkstücken, insbesondere von optischen Linsen und anderen optischen Bauelementen, insbesondere während des Transportes, gekennzeichnet durch eine Membrane (4) aus elastischem Werkstoff, die eine mit dem Werkstück (W) in Eingriff bringbare umlaufende Spannfläche (28) aufweist und mit einem Tragkörper (2, 3, 5, 13) für die Membrane (4), an dem diese fluiddicht so eingespannt ist, dass zwischen Tragkörper (2, 3, 5, 13) und Membrane (4) eine Kammer (31) besteht, die über Kanäle (16, 15, 9, 7) mit einer Quelle und/oder Senke für ein Fluid, insbesondere für ein Druckgas, insbesondere für Luft, verbindbar ist und dass die Membrane (4) durch Änderung des Fluiddruckes in der Kammer (31) so deformierbar ist, dass die Spannfläche (28) wahlweise aufgeweitet und zusammengezogen wird.

2. Vorrichtung nach Anspruch 1, dadurch gekennzeichnet, dass die Membrane (4) ringförmig ist und längs ihres Aussenrandes und ihres Innenrandes eingespannt ist.

3. Vorrichtung nach einem der vorhergehenden Ansprüche, für die Spannung eines Werkstückes (H) an seinem Umfang, dadurch gekennzeichnet, dass die Spannfläche (28) in der Nähe des Aussenrandes der Membrane (4) angeordnet ist und durch Aufwölbung der Membrane (4) mittels Druckgas trichterförmig aufweitbar ist.

4. Vorrichtung nach einem der vorhergehenden Ansprüche, dadurch gekennzeichnet, dass von der Rückseite der Membrane (4) mindestens eine an die Membrane (4) angeformte Einspannwand (22, 23) abragt, die vorzugsweise einen flanschartigen Einspannrand (24, 25) aufweist.

5. Vorrichtung nach Anspruch 4, dadurch gekennzeichnet, dass bei einer ringförmigen Membrane (4) diese am Aussenrand und am Innenrand eine Einspannwand (23 bzw. 22) aufweist.

6. Vorrichtung nach einem der vorhergehenden Ansprüche, dadurch gekennzeichnet, dass die Membrane (4) in der Spannstellung oder in der Aufnahmestellung an einer starren Anlagefläche (17) anliegt.

7. Vorrichtung nach Anspruch 6, dadurch gekennzeichnet, dass mindestens bei einer Membrane (4) für die Spannung des Werkstückes (W) an seinem Aussenumfang (29) die starre Anlagefläche (17) hohlkegelig ausgebildet ist, vorzugsweise mit einem grossen Kegelwinkel (α) im Bereich von 175 bis 160.

8. Vorrichtung nach einem der Ansprüche 5 bis 7, gekennzeichnet durch einen Grundkörper (2), einen auf diesem aufliegenden Membrane-Haltekörper (3), einem mit dem Grundkörper (2) verbundenen Umfassungsring (13), der den Membrane-Haltekörper (3) gegen den Grundkörper (2) drückt und einer Membrane-Einspannscheibe (5), die die innere Einspannwand (22) gegen den Membrane-Haltekörper (3) drückt.

9. Vorrichtung nach Anspruch 8, dadurch gekennzeichnet, dass die äussere Einspannwand (23) zwischen den Umfassungsring (13) und den Membrane-Haltekörper (3) eingespannt ist.

**Claims**

1. A device for holding delicate workpieces, in particular optical lenses and other optical components, more particularly during transport, characterised by a diaphragm (4) comprised of an elastic material, which has a rotating clamping surface (28) which can be engaged with the workpiece (W) and having a bearing body (2, 3, 5, 13) for the diaphragm (4), on which the latter is fluidimpervious so that between the bearing body (2, 3, 5, 13) and the diaphragm (4) there is a chamber (31), which is connected via channels (16, 15, 9, 7) to a source and/or a hollow for a fluid, more particularly a pressurised gas, more particularly for air and that the diaphragm (4) is deformable by altering the fluid pressure in the chamber (31), so that the clamping surface is selectively widened and contracted.

2. A device according to claim 1, characterised in that the diaphragm (4) is annular and is clamped along its outer and inner edge.

3. A device according to either one of the preceding claims, for clamping a workpiece (H) on its periphery, characterised in that the clamping surface (28) is arranged close to the outer edge of the diaphragm (4) and is extensible in the form of a funnel by arching the diaphragm (4) by means of a pressurised gas.

4. A device according to any one of the preceding claims, characterised in that from the reverse side of the diaphragm (4) at least one clamping wall (22, 23) formed integral with the diaphragm (4) projects downwards and has a flange-type clamping edge (24, 25).

5. A device according to claim 4, characterised in that in the case of an annular diaphragm (4) it has a clamping wall (23, or 22) on the inner and outer edge.

6. A device according to any one of the preceding claims, characterised in that the diaphragm (4) in the clamping position or in the receiving position rests against a rigid contact surface (17).

7. A device according to claim 6, characterised in that at least in the case of a diaphragm (4) for clamping the workpiece (W) at its outer periphery (29) the rigid contact surface (17) is formed as a hollow cone, preferably with a large cone angle (α) in the range of 175 to 160°.

8. A device according to any one of claims 5 to 7, characterised by a base body (2), a diaphragm holding body (3) resting thereon, a containing ring (13) connected to the base body (2), and which presses the diaphragm holding body against the base body (2) and a diaphragm clamping disc (5), which presses the inner clamping wall (22) against the diaphragm holding body (3).

9. A device according to claim 8, characterised in that the outer clamping wall (23) is clamped between the containing ring (13) and the diaphragm holding body (3).

## Revendications

1. Dispositif pour maintenir des pièces d'œuvre délicates, en particulier des lentilles optiques et d'autres éléments de structure optique, en particulier au cours d'un transport, caractérisé par le fait qu'il comprend une membrane (4) en matière élastique, qui présente une surface de serrage (28), pouvant être amenée à entourer et saisir la pièce d'œuvre (W) et un corps de maintien (2, 3, 5, 13) de la membrane (4) contre lequel celle-ci est appliquée de façon étanche aux fluides de façon qu'il se forme, entre le corps support (2, 3, 5, 13) et la membrane (4), une chambre (31) qui peut être reliée par des canaux (16, 15, 9, 7) à une source et/ou à un fond creux fournissant un fluide, en particulier un gaz sous pression, notamment de l'air, et de façon que, par variation de la pression du fluide dans la chambre (31), la membrane (4) soit déformable de manière que la surface de serrage (28) soit dilatée ou contractée à volonté.

2. Dispositif selon la revendication 1, caractérisé en ce que la membrane (4) est annulaire et fixée le long de son bord extérieur et de son bord intérieur.

3. Dispositif selon l'une des revendications précédentes, pour serrer une pièce d'œuvre (H) par sa périphérie, caractérisé en ce que la surface de serrage (28) est disposée au voisinage du bord extérieur de la membrane (4) et peut être élargie en forme d'entonnoir par gonflement de la membrane (4) au moyen d'un gaz sous pression.

4. Dispositif selon l'une des revendications précédentes, caractérisé en ce qu'au moins une paroi de fixation (22, 23), formée avec la membrane (4), s'écarte de la face arrière de celle-ci, et comporte de préférence un bord de fixation (24, 25) en forme de bride.

5. Dispositif selon la revendication 4, caractérisé en ce que dans le cas d'une membrane (4) annulaire, celle-ci possède, à son bord extérieur et à son bord intérieur, une paroi de fixation (23, 22).

6. Dispositif selon l'une des revendications précédentes, caractérisé en ce que la membrane (4) s'applique, dans la position de serrage ou dans la position de réception, contre une surface d'appui (17) rigide.

7. Dispositif selon la revendication 6, caractérisé en ce qu'au moins dans le cas d'une membrane (4) pour le serrage de la pièce d'œuvre (W) par sa périphérie extérieure (29), la surface d'appui (17) est constituée sous une forme conique creuse, de préférence avec un grand angle de cône (α) dans le domaine de 175 à 160°.

8. Dispositif selon l'une des revendications 5 à 7, caractérisé par un fond (2), une pièce (3) de maintien de la membrane sur le fond, un anneau d'entourage (13), relié au fond (2), qui appuie la pièce de maintien de membrane (3) contre le fond et un disque (5) de fixation de la membrane, qui appuie la paroi intérieure (22) de fixation contre la pièce (3) de maintien de la membrane.

9. Dispositif selon la revendication 8, caractérisé en ce que la paroi (23) de fixation extérieure est fixée entre l'anneau d'entourage (13) et la pièce (3) de maintien de la membrane.